# EUROPÄISCHE PATENTSCHRIFT

(11) **EP 1 375 205 B1**
(45) Veröffentlichungstag und Bekanntmachung des Hinweises auf die Patenterteilung: **16.08.2006**
(21) Anmeldenummer: 03013200.5
(22) Anmeldetag: 12.06.2003
(51) Int. Cl.: B60G 17/015, G01D 5/20

(54) **Sensor zur Erfassung der Lage zweier relativ zueinander beweglicher Teile**
Sensor for detecting the relative position of two parts
Capteur pour la détection du mouvement relatif de deux pièces

(30) Priorität: 20.06.2002 EP 02013672
(43) Veröffentlichungstag der Anmeldung: 02.01.2004
(73) Patentinhaber: Tyco Electronics AMP GmbH, 64625 Bensheim (DE)
(72) Erfinder: Hoffelder, Bernd, 67354 Römerberg (DE)
(74) Vertreter: Patentanwaltskanzlei WILHELM & BECK

(56) Entgegenhaltungen:
- EP-A- 0 693 674
- WO-A-00/25093
- DE-A- 4 425 904
- DE-A- 19 918 404
- US-A- 4 778 156
- US-A- 5 233 293
- US-A- 5 952 823

## Beschreibung

Die Erfindung betrifft einen Sensor zur Erfassung der Lage zweier relativ zueinander beweglicher Teile, insbesondere einen berührungslos arbeitenden Höhensensor zur Erfassung einer Fahrwerks- bzw. Aufbauhöhe eines Kraftfahrzeuges, gemäß dem Oberbegriff des unabhängigen Anspruchs.

Die Messung des Abstandes zweier relativ zueinander beweglicher Teile kann bei vielen Anwendungen im Kraftfahrzeug- oder Schienenfahrzeugbau erforderlich sein. Bei Schienenfahrzeugen ist beispielsweise zur permanenten Erfassung einer Aufbauhöhe ein Weg- oder Abstandssensor notwendig. Dessen Signale können in einer Regelschaltung weiterverarbeitet und zur aktiven Dämpfungsregelung bzw. zur Veränderung einer Aufbauneigung verwendet werden. Bei Kraftfahrzeugen ist eine Information über einen aktuellen Beladungs- bzw. Neigungszustand der Fahrzeugskarosserie zur Ansteuerung einer Scheinwerferhöhenverstellung, einer Niveauregulierung oder einer aktiven Dämpferverstellung notwendig.

Eine Anordnung aus einer Faltenbalg-Luftfeder und einem, dieser zugeordneten Höhensensor eines Schienenfahrzeuges ist aus der DE 101 10 878 A1 bekannt. Bei dieser Anordnung ist neben dem Luftbalg der Luftfederung ein linear arbeitender Höhensensor angebracht, der permanent den Abstand eines Fahrgestells vom Aufbau des Schienenfahrzeuges erfasst. Die Abtastung der Höhe erfolgt mechanisch über einen Taststößel, der in ein Führungsrohr eintaucht und dessen Eintauchtiefe gemessen wird.

Ein Höhensensor zur Erfassung des Abstandes eines Aufhängungslenkers von einer Fahrzeugkarosserie ist aus der DE 199 18 404 A1 bekannt. Der Höhensensor umfasst eine Erregerspule zur Erzeugung eines Wechselmagnetfeldes und eine Detektorspule zur Erfassung der Stärke dieses Magnetfelds. Die Erregerspule ist an einem Aufhängungsarm und die Detektorspule an einem Teil der Fahrzeugkarosserie so angebracht, dass sie einander gegenüberliegen. Die Entfernung zwischen diesen Spulen wird durch eine von der Aufnahmespule ausgegebene Spannung bestimmt. Eine Höhe des Fahrzeugs wird aus der Entfernung zwischen den Spulen unter Berücksichtung der Montageposition der Aufnahmespule an dem Aufhängearm berechnet

Aus US 4,778,156 ist eine Vorrichtung zur Anpassung einer Fahrzeughöhe bekannt, das einen hydraulischen Dämpfer mit einem Gehäuse und einem Pistenkolben aufweist. Die Vorrichtung weist parallel zum Kolben einen Sensor auf, der mit dem Kolben und der Fahrzeugkarosserie verbunden ist und somit die Höhenposition des Fahrzeugs erfassen kann. Der Sensor weist einen ringförmigen Magneten auf, durch dessen Öffnung eine Hülse und eine darin bewegbare Stange geführt sind. Die Hülse und die Stange sind mit den zwei gegeneinander bewegbaren Teilen verbunden und der Magnet ist über Federelemente zwischen den zwei bewegbaren Teilen eingespannt. Bei einer Veränderung der Höhenposition verändert der Magnet seine Position gegenüber der Hülse, so dass ein entsprechendes elektrisches Signal erzeugt wird.

Aus US 5,952,823 ist ein Stoßdämpfer mit einem magnetostriktiven Lagesensor bekannt. Der Stoßdämpfer weist einen Kolben und eine Hülse auf, wobei der Kolben gegenüber der Hülse verschiebbar gelagert ist. Im Kolben ist ein magnetostriktives Element angeordnet. Der Kolben ist zudem von einem Ringmagneten umgeben. Das magnetostriktive Element weist einen Wellenleiter auf, der mit elektrischen Pulssignalen versorgt wird. In Abhängigkeit von der Höhenposition des magnetostriktiven Elements in Bezug auf den Ringmagneten werden vom Wellenleiter unterschiedliche Signale an eine Auswerteschaltung gegeben.

Aus EP 0 693 674 A ist eine Vorrichtung mit einem Messtransformator zur Erfassung der Position eines linear beweglichen Objekts bekannt. Der Messtransformator weist einen langgestreckten Kern auf, auf dem eine erste, langgestreckte Wicklung und über die eine zweite, geteilte Wicklung jeweils annähernd im Bereich der Enden gewickelt ist. Ein Ansteuermagnet ist längs eines linearen Verfahrwegs annähernd parallel zur ersten, langgestreckten Wicklung beweglich angeordnet. Eine Ansteuer- und Auswerteschaltung enthält eine Stromquelle, welche einen periodischen Wechselstrom in die erste, langgestreckte Wicklung einprägt und einen Gleichrichter, welcher aus einer Messwechselspannung am Ausgang der zweiten geteilten Wicklung eine Messgleichspannung mit einer von der aktuellen Lage des Ansteuermagneten auf dem Verfahrweg abhängige Amplitude bildet.

Aus WO 00/25093 ist eine Steuereinheit bekannt, die einen Positionssensor in Form einer pulsinduktiven Vorrichtung aufweist, die einem elektrisch leitenden Zielabschnitt zugeordnet ist. Der Positionssensor erfasst die relative Lage zum Zielabschnitt und gibt ein entsprechendes elektrisches Signal aus.

Aus der gattungsgemässen US 5,233,293 ist ein Sensor zur Messung der Geschwindigkeit und/oder der Position eines Kolbens in Bezug auf einen Zylinder in einem Stoßdämpfer bekannt. Der Stoßdämpfer weist einen ersten Teilzylinder auf, in dem ein Kolben über einen Führungsring in einen unteren Bereich geführt ist. In einem oberen Bereich ist der Kolben über eine zweite axiale Führung aus dem ersten Teilzylinder herausgeführt. Weiterhin ist ein zweiter Teilzylinder vorgesehen, der über den ersten Teilzylinder aufgesteckt ist und durch den ein oberes Ende des Kolbens geführt ist. Es ist ein ringförmiger Permanentmagnet vorgesehen, der den Kolben umgibt, und der an der Innenseite der ersten Hülse befestigt ist. Auf der Außenseite des Kolbens ist eine Spule angrenzend an den Permanentmagneten angeordnet. Der Permanentmagnet erzeugt ein magnetisches Feld. Bei einer Bewegung des Kolbens wird die Spule gegenüber dem magnetischen Feld bewegt und ein entsprechendes elektrisches Signal erzeugt, anhand dessen die Position und/oder die Geschwindigkeit des Kolbens ermittelt werden kann.

Ein Ziel der Erfindung besteht darin, eine robuste und einfach aufgebaute Anordnung zur Verfügung zu stellen, die jederzeit eine genaue Erfassung einer Fahrzeughöhe bei einer ungenauen Ausrichtung des Magnetfelderzeugers auf den Magnetfelddetektor ermöglicht.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Ein Sensor zur Erfassung der Lage zweier relativ zueinander beweglicher Teile weist einen an einem ersten Teil angebrachten Magnetfelderzeuger und einen an einem relativ zum ersten Teil beweglichen zweiten Teil angebrachten Magnetfelddetektor auf. Der Magnetfelddetektor weist eine stabförmige Kontur auf und ist in einem Magnetfeld des Magnetfelderzeugers entlang seiner Stablängsrichtung beweglich. Erfindungsgemäß ist vorgesehen, dass das vom Magnetfelderzeuger gebildete Magnetfeld innerhalb eines Bereiches, der einem Mehrfachen des Stabdurchmessers des Magnetfelddetektors entspricht, weitgehend homogen ist. Ein solcher Sensor ermöglicht eine relativ große Seitenabweichung des Magnetfelddetektors bezüglich der Ausrichtung zum Magnetfelderzeuger und kann dadurch auch unter ungünstigen kinematischen Bedingungen sehr genaue Messwerte liefern.

Erfindungsgemäß ist das erste Teil mit dem daran befestigten Permanentmagneten ein bewegliches Aufhängungsteil eines Fahrwerks eines Kraftfahrzeugs und das zweite Teil mit der daran befestigten Spule ein fahrzeugfestes Teil des Kraftfahrzeugs.

Der erfindungsgemäße Sensor eignet sich insbesondere zur kontinuierlichen Erfassung der Fahrzeughöhe bzw. der Einfederrate der Fahrzeugkarosserie bezüglich der Fahrbahnoberfläche. Ein derartiger Sensor kann insbesondere Verwendung finden zur Höhenregelung einer Scheinwerfereinstellung einer Niveauregulierung oder beispielsweise zur Lieferung von Eingangssignalen für eine aktive Fahrwerksregelung. Dabei kann in einer Ausgestaltung der Erfindung das Sensorsignal der Spule einen Wert liefern, der einer bestimmten aktuellen Fahrzeughöhe entspricht.

Gemäß einer bevorzugten Ausgestaltung der Erfindung ist der Magnetfelderzeuger ein Permanentmagnet und der Magnetfelddetektor eine Spule.

Eine weitere bevorzugte Ausgestaltung der Erfindung sieht vor, dass der Permanentmagnet ein Ringmagnet ist, dessen Mittelachse im wesentlichen parallel ist zur Längsachse der stabförmigen Spule. Auf diese Weise wird ein in gewissen Bereichen relativ homogenes Magnetfeld erzeugt, das ein Bereich weitgehend gleicher Feldstärke mit einer schüsselförmigen Kontur mit weitgehend flachem Boden aufweist. Die stabförmige Spule des Magnetfelddetektors kann auf diese Weise im Bereich annähernd gleicher Feldstärke seitlich bewegt werden, ohne dass hierdurch die Messwerte stark verfälscht werden.

Eine alternative Ausgestaltung der Erfindung sieht vor, dass der Permanentmagnet aus zwei gabelförmig angeordneten Stabmagneten besteht, deren Längsrichtung jeweils senkrecht zur zwischen ihnen angeordneten stabförmigen Spule orientiert ist. Vorzugsweise weist das von den beiden gabelartig angeordneten Stabmagneten erzeugte Magnetfeld einen Bereich weitgehend gleicher Feldstärke mit einer flachgewölbten Kontur mit weitgehend ebenem Mittelbereich auf. Auf diese Weise kann der stabförmige Magnetfelddetektor auch bei dieser Ausführungsform der Erfindung in relativ weiten Bereichen seitlich ausgelenkt werden, ohne dass damit eine deutliche Messwertverfälschung verbunden ist.

Der erfindungsgemäße Sensor weist den Vorteil eines berührungslosen Messprinzips auf, das robust gegen Umwelteinflüsse ist. Die Montage ist relativ einfach, da die Spule nicht exakt im Zentrum des Permanentmagneten angeordnet sein muss. Ein Ringmagnet liefert zwar die exakteren Messwerte auch bei größeren Abweichungen der Spule vom Arbeitspunkt als ein Gabelmagnet, doch lässt sich dieser aufgrund der dabei verwendeten Stabmagneten kostengünstiger herstellen. Auch der Gabelmagnet liefert relativ genaue Messwerte bei entsprechend kleineren Abweichungen vom Arbeitspunkt im Zentrum der überlagerten Magnetfelder der Stabmagneten.

Ein Ausführungsbeispiel der Erfindung wird nachfolgend unter Bezugnahme auf die beiliegenden Figuren erläutert. Dabei zeigt:
Figur 1 eine schematische Darstellung einer Aufhängung eines Fahrzeugrades,
Figur 2 einen erfindungsgemäßen Sensor in schematischer Perspektivdarstellung,
Figur 3 eine räumliche Verteilung eines vom Ringmagneten erzeugten Magnetfeldes in qualitativer Darstellung,
Figur 4 einen Signalverlauf bei variierender Auslenkung der Spule aus dem Zentrum des Ringmagneten,
Figuren 5 bis 8 eine alternative Ausführungsform des Sensors mit einem Gabelmagneten in verschiedenen Perspektivdarstellungen,
Figur 9 eine räumliche Verteilung eines vom Gabelmagneten erzeugten Magnetfeldes in qualitativer Darstellung und
Figur 10 einen Signalverlauf bei variierender Auslenkung der Spule aus dem Zentrum des Ringmagneten.

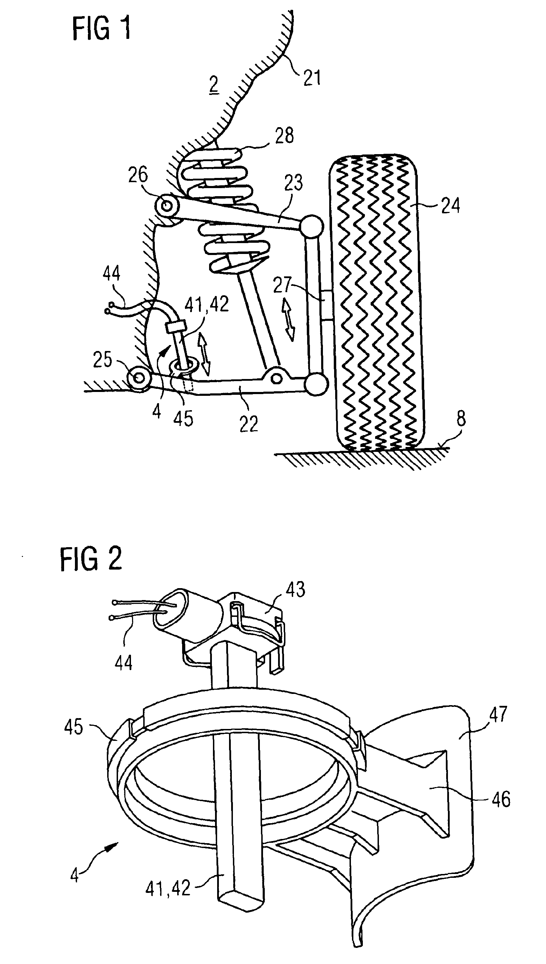

Figur 1 zeigt eine schematische Darstellung einer Aufhängung eines Fahrzeugrades 24 an einem Fahrzeugrahmen 21 eines Kraftfahrzeuges 2. Das Fahrzeugrad 24, das auf einer Fahrbahnoberfläche 8 abrollt, ist über eine Achse 27 an einem unteren und oberen Achslenker 22, 23 aufgehängt. Die Achslenker 22, 23 sind jeweils über einen unteren bzw. oberen Anlenkpunkt 25, 26 gelenkig mit dem Fahrzeugrahmen 21 verbunden. Am unteren Achslenker 22 stützt sich ein Federbein 28 gegen den Fahrzeugrahmen 21 und sorgt dafür, dass das Fahrzeug 2 unter Belastung einfedern kann.

Am unteren Achslenker 22 ist ein Ringmagnet 45 fest angebracht, der im Zusammenwirken mit einer stabförmigen Spule 41, 42 einen Sensor 4 zur Erfassung einer Fahrzeughöhe bildet. Da der untere Achslenker 22 unter Belastung Relativbewegungen zum Fahrzeugrahmen 21 ausführen kann, ist der Abstand vom fest am Achslenker 22 befestigten Ringmagneten 45 und der fest am Fahrzeugrahmen 21 befestigten Spule 41 variabel. Die Spule 41 taucht mit ihrem Stab 42 mehr oder weniger tief in die Öffnung des Ringmagneten 45 ein und liefert ein entsprechendes Signal an eine hier nicht dargestellte Auswerteelektronik. Hierfür sind Zuleitungen 44 vorgesehen, die in Figur 1 angedeutet sind.

Figur 2 zeigt in schematischer Perspektivdarstellung einen erfindungsgemäßen Sensor 4, der im gezeigten Ausführungsbeispiel aus einer stabförmigen Spule 41 mit einer Ansteuerschaltung 43 und mit dieser verbundenen Zuleitungen 44 sowie einem Ringmagneten 45 besteht. Der Ring des Ringmagneten 45 ist über einen Ausleger 46 mit einem Befestigungsbereich 47 verbunden, der vorzugsweise an einem beweglichen Teil des Fahrzeugs, beispielsweise einem Achslenker oder einem anderen Aufhängungsteil, befestigt ist.

Wie in Figur 2 verdeutlicht, kann der Stab 42 in einem gewissen Bereich innerhalb des offenen Ringes des Ringmagneten 45 angeordnet sein, ohne dass dadurch das Messsignal stark beeinträchtigt wird. Der Stab 42 mit der darin angeordneten länglichen Spule 41 weist einen wesentlich kleineren Querschnitt auf als der Innendurchmesser des Ringmagneten 45 beträgt.

Der Spulenteil des Sensors 4 umfasst im gezeigten Ausführungsbeispiel den länglichen Stab 42 mit der darin angeordneten Spule 41. Diese ist vorzugsweise auf einen weichmagnetischen Kern gewickelt. Am oberen Ende des Stabes 42 ist ein Gehäuseteil mit einer darin befindlichen Ansteuerschaltung 43 erkennbar, die über Zuleitungen 44 mit einer zentralen Auswerteelektronik verbunden ist.

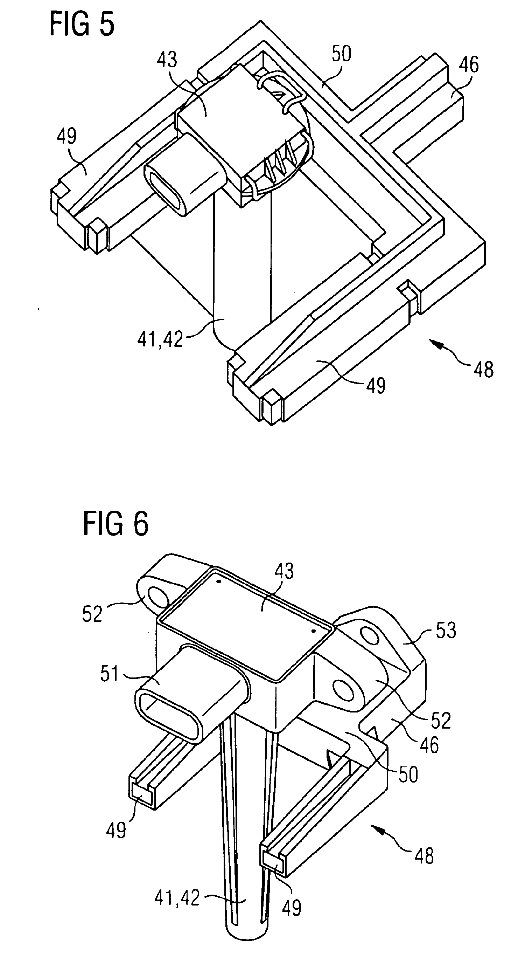

Das Messprinzip, das dem erfindungsgemäßen Sensor zu Grunde liegt, ist bspw. in der DE 44 25 903 A1 und in der DE 44 25 904 A1 beschrieben. In der Spule 41 wird eine variable Spannung indiziert, die weitgehend nur von der Eintauchtiefe der Spule im Ringmagneten 45 bzw. im Gabelmagneten (vgl. Figur 5) und kaum von der Zentrierposition in dessen Mittelachse abhängt.

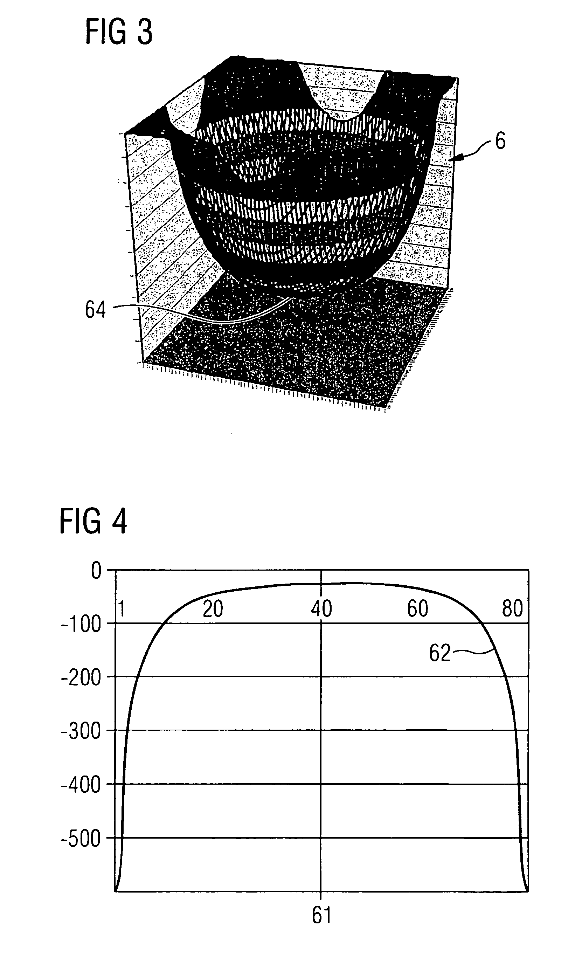

Figur 3 verdeutlicht diesen Zusammenhang, indem eine räumliche Verteilung der Magnetfeldstärke des durch den Ringmagneten 45 erzeugten Magnetfeldes 6 dargestellt ist. Das Magnetfeld 6 weist einen relativ flachen Mittelbereich 64 auf, innerhalb dessen die stabförmige Spule 41 bewegt werden kann, ohne dass deren Messsignal eine deutliche Abweichung liefert.

Der erfindungsgemäße Sensor ermöglicht somit die berührungslose Abstandsmessung zweier relativ zueinander beweglicher Teile innerhalb eines relativ großen Spielraumes hinsichtlich der Zentrierung der in einem von einem Permanentmagneten erzeugten Magnetfeld beweglichen Spule.

Figur 4 zeigt in einem zweidimensionalen Diagramm einen beispielhaften quantitativen Zusammenhang der Abweichung des Sensorsignals 62 in Abhängigkeit vom Abstand vom Arbeitspunkt 61, der sich im Zentrum des Ringmagneten 45 befindet. Auf der horizontalen Achse ist der maximale Innendurchmesser der Spule und auf der vertikalen Achse die Feldstärke aufgetragen. Im dargestellten qualitativen Diagramm wird deutlich, dass die gemessene Feldstärke in einem Bereich von bis zu 20 mm außerhalb des zentralen Arbeitspunktes 61 des Ringmagneten 45 mit einem Innendurchmesser von 80 mm nur geringfügig abfällt. Der Messfehler ist hierbei somit relativ gering. In einem Bereich von bis zu 9 mm vom Arbeitspunkt beträgt in der Regel weniger als 0,5 %. Diese Werte gelten für einen Ringmagneten mit einem Außendurchmesser von 100 mm, einem Innendurchmesser von 80 mm, einer Höhe von 6,5 mm und einer Remanenz von 1,25 Tesla.

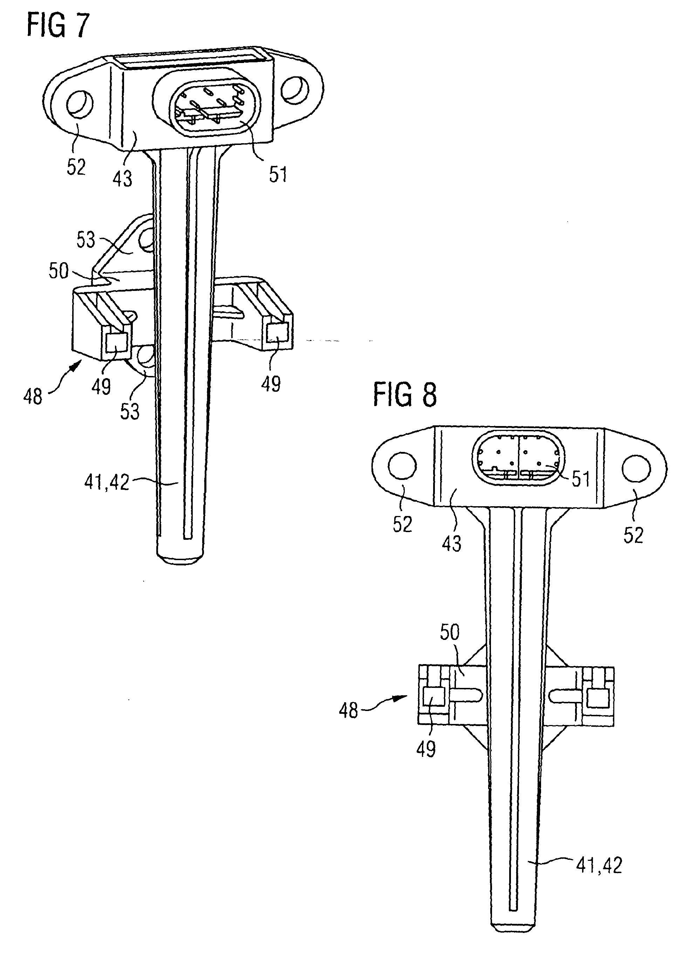

Die Figuren 5 bis 8 zeigen jeweils in schematischen Perspektivdarstellungen eine alternative Ausführungsform des Sensormagneten, der hier als Gabelmagnet 48 ausgebildet ist. Hierbei sind an einem Verbindungsabschnitt 50, der über einen Ausleger 46 am beweglichen Fahrzeugteil befestigbar ist, zwei Stabmagneten 49 in Rechtem Winkel angebracht. Innerhalb des dadurch gebildeten U-förmigen Schenkels kann der Stab 42 der Spule 41 auf und ab bewegt werden. Ein quaderförmiger Kopfbereich des Sensors 4 dient als Gehäuse für eine darin eingebaute Ansteuerschaltung 43, die über eine Steckbuchse 51 mit einer Auswerteschaltung einer zentralen Steuereinheit gekoppelt ist. Am Kopfbereich sind Befestigungsflansche 52 zur Fixierung der Spule 41 an einem Fahrzeugteil, vorzugsweise einem fahrzeugfesten Teil, vorgesehen. Am Verbindungsabschnitt 50 des Gabelmagneten 48 sind ebenfalls Befestigungsflansche 53 vorgesehen, mittels derer der Gabelmagnet 48 an einem Fahrzeugteil, vorzugsweise einem beweglichen Fahrzeugteil fixiert werden kann.

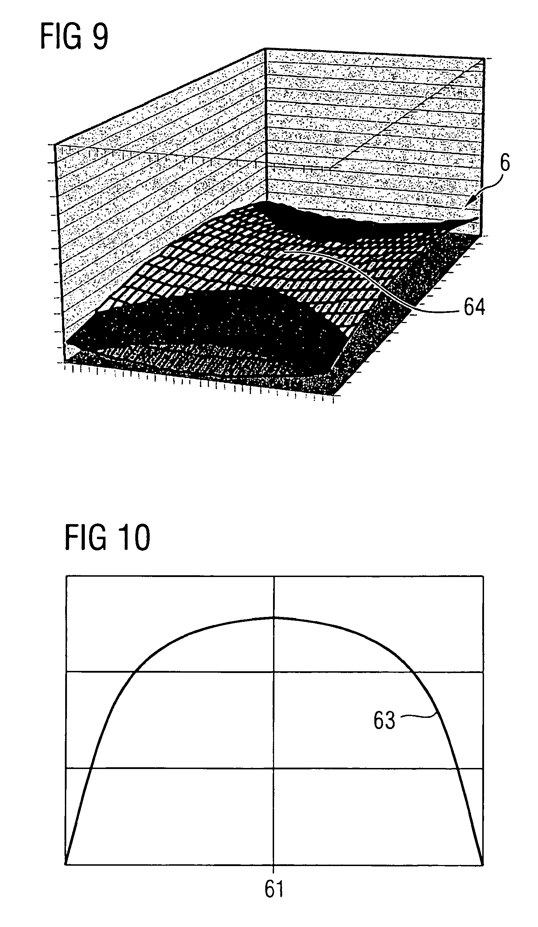

Figur 9 verdeutlicht ein vom Gabelmagneten 48 erzeugtes Magnetfeld 6, das über weite Bereiche einen relativ flachen Verlauf und somit eine geringe Messwertverfälschung liefert. Die Felder der beiden Stabmagneten 49 sind hierbei überlagert.

Figur 10 verdeutlicht in einem weiteren quantitativen Diagramm einen Zusammenhang zwischen Abweichungen der Spule vom Arbeitspunkt 61 und dem Sensorsignal 63 des Gabelmagneten. Die Feldstärke fällt zu beiden Seiten des Arbeitspunktes mit steigendem Abstand zu diesem etwas stärker ab als bei der ersten Ausführungsform mit dem Ringmagneten.

Als Material für die Permanentmagneten eignet sich beispielsweise sogenanntes Koerdym (Neodym-Eisen2-Bor). Typische Abmessungen für den Ringmagneten sind ein Außendurchmesser von 80 mm, ein Innendurchmesser von 60 mm und eine Höhe von 6,5 mm. Typische Abmessungen für den Gabelmagneten können bspw. in einem Abstand der beiden Stabmagneten von ca. 80 bis 100 mm und in Stababmessungen von 100 x 20 x 10 mm liegen. Die Remanenz der Magnete kann bspw. in einem Bereich zwischen 0,5 und 1,5 T liegen.

### Bezugszeichenliste

- 2: Fahrzeug
21 Fahrzeugrahmen
22 unterer Achslenker (Aufhängungsteil)
23 oberer Achslenker
24 Fahrzeugrad
25 unterer Anlenkpunkt
26 oberer Anlenkpunkt
27 Achse
28 Federbein
- 4: Sensor
41 Spule
42 Stab
43 Ansteuerschaltung
44 Zuleitung
45 Ringmagnet
46 Ausleger
47 Befestigungsbereich
48 Gabelmagnet
49 Stabmagnet
50 Verbindungsabschnitt
51 Steckbuchse
52 Befestigungsflansch (Spule)
53 Befestigungsflansch (Gabelmagnet)
- 6: Magnetfeld
61 Arbeitpunkt
62 Sensorsignal (Ringmagnet)
63 Sensorsignal (Gabelmagnet)
64 Mittelbereich
- 8: Fahrbahnoberfläche

## Patentansprüche

1. Anordnung mit einem Sensor (4) zur Erfassung einer Fahrzeughöhe mit einem Magnetfelderzeuger (45; 48, 49) und einem Magnetfelddetektor (41, 42), wobei der Magnetfelderzeuger (45; 48, 49) an einem ersten Teil (22) angebracht ist, wobei der Magnetfelddetektor (41, 42) an einem relativ zum ersten Teil beweglichen zweiten Teil angebracht ist, wobei der Magnetfelddetektor (41, 42) eine stabförmige Kontur aufweist und in einem Magnetfeld des Magnetfelderzeugers (45; 48, 49) entlang seiner Längsrichtung beweglich ist, **dadurch gekennzeichnet, dass** der Magnetfelderzeuger (45; 48, 49) ein Magnetfeld (6) bildet, das innerhalb eines Bereiches, der einem Mehrfachen des Stabdurchmessers des Magnetfelddetektors (41, 42) entspricht, homogen ist,
dass ein Fahrzeugrad (24) über eine Achse (27) an einem oberen und einem unteren Achslenker (23, 22) aufgehängt ist, dass der untere und obere Achslenker (22, 23) jeweils über einen oberen und unteren Anlenkpunkt (25, 26) gelenkig mit einem Fahrzeugrahmen (21) verbunden sind, dass sich am unteren Achslenker (23) ein Federbein (28) gegen den Fahrzeugrahmen (21) abstützt,
dass am unteren Achslenker (23) der Magnetfelderzeuger (45; 48, 49) befestigt ist,
dass der Magnetfelddetektor (41, 42) fest am Fahrzeugrahmen befestigt ist,
und dass der Magnetfelddetektor (41, 42) in einem Mittelbereich (64) des homogenen Bereichs des Magnetfelds (6) angeordnet ist.

2. Sensor nach Anspruch 1, **dadurch gekennzeichnet, dass** der Magnetfelderzeuger ein Permanentmagnet und dass der Magnetfelddetektor eine Spule (41) ist.

3. Sensor nach Anspruch 2, **dadurch gekennzeichnet, dass** der Permanentmagnet ein Ringmagnet (45) ist, dessen Mittelachse im Wesentlichen parallel ist zur Längsachse der stabförmigen Spule (41).

4. Sensor nach Anspruch 3, **dadurch gekennzeichnet, dass** das vom Ringmagnet (45) erzeugte Magnetfeld (6) einen Bereich weitgehend gleicher Feldstärke mit einer schüsselförmigen Kontur mit weitgehend flachem Boden aufweist

5. Sensor nach Anspruch 2, **dadurch gekennzeichnet, dass** der Permanentmagnet aus zwei gabelartig angeordneten Stabmagneten (49) besteht, deren Längsrichtung jeweils senkrecht zur zwischen ihnen angeordneten stabförmigen Spule (41) orientiert ist.

6. Sensor nach Anspruch 5, **dadurch gekennzeichnet, dass** das von den beiden gabelartig angeordneten Stabmagneten (49) erzeugte Magnetfeld (6) einen Bereich weitgehend gleicher Feldstärke mit einer flach gewölbten Kontur mit weitgehend ebenem Mittelbereich aufweist.

7. Sensor nach einem der vorhergehenden Ansprüche, **dadurch gekennzeichnet, dass** das erste Teil mit dem daran befestigten Permanentmagneten ein bewegliches Aufhängungsteil eines Fahrwerks eines Kraftfahrzeugs (2) und das zweite Teil mit der daran befestigten Spule ein fahrzeugfestes Teil des Kraftfahrzeugs (2) ist.

8. Sensor nach Anspruch 7, **dadurch gekennzeichnet, dass** das Sensorsignal der Spule (41) einen Wert liefert, der einer bestimmten aktuellen Fahrzeughöhe entspricht.

## Claims

1. Arrangement with a sensor (4) for detecting vehicle height, having a magnetic field generator (45; 48, 49) and a magnetic field detector (41, 42), the magnetic field generator (45; 48, 49) being mounted on a first part (22), the magnetic field detector (41, 42) being movably mounted on a second part relative to the first part, the magnetic field detector (41, 42) exhibiting a bar-type contour and being movable in the longitudinal direction thereof in a magnetic field of the magnetic field generator (45; 48, 49), **characterised in that** the magnetic field generator (45; 48, 49) forms a magnetic field (6), homogeneous within a zone corresponding to a multiple of the bar diameter of the magnetic field detector (41, 42),
**in that** a vehicle wheel (24) is suspended by means of an axle (27) on an upper and a lower suspension arm (23, 22), **in that** the lower and upper suspension arms (22, 23) are each connected in articulated manner to a vehicle frame (21) by an upper and lower coupling point (25, 26), **in that** a spring (28) on the lower suspension arm (22) is leaning against the vehicle frame (21),
**in that** the magnetic field generator (45; 48, 49) is fixed to the lower suspension arm (22),
**in that** the magnetic field detector (41, 42) is firmly fixed to the vehicle frame,
and **in that** the magnetic field detector (41, 42) is arranged in a central zone (64) of the homogeneous zone of the magnetic field (6).

2. Sensor according to claim 1, **characterised in that** the magnetic field generator is a permanent magnet and **in that** the magnetic field detector is a coil (41).

3. Sensor according to claim 2, **characterised in that** the permanent magnet is a ring magnet (45), with its central axis being substantially parallel to the longitudinal axis of the bar-type coil (41).

4. Sensor according to claim 3, **characterised in that** the magnetic field (6) generated by the ring magnet (45) comprises a zone of largely equal field strength with a dish-shaped contour with a largely flat base.

5. Sensor according to claim 2, **characterised in that** the permanent magnet consists of two fork-shaped bar magnets (49), the lengthwise direction of each being oriented perpendicularly to the bar-type coil (41) arranged between them.

6. Sensor according to claim 5, **characterised in that** the magnetic field (6) generated by the two fork-shaped bar magnets (49) comprises a zone of largely equal field strength with a slightly curved contour with a largely planar central zone.

7. Sensor according to any one of the preceding claims, **characterised in that** the first part with the permanent magnet attached thereto is a movable suspension part of the running gear of a motor vehicle (2) and the second part with the coil attached thereto is a part of the motor vehicle (2) integral with the vehicle.

8. Sensor according to claim 7, **characterised in that** the sensor signal of the coil (41) supplies a value corresponding to a specific current vehicle height.

## Revendications

1. Dispositif comportant un capteur (4) pour la détection d'une hauteur de véhicule, comportant un générateur de champ magnétique (45; 48, 49) et un détecteur de champ magnétique (41, 42), le générateur de champ magnétique (45; 48, 49) étant agencé sur une première partie (22), le détecteur de champ magnétique (41, 42) étant agencé amovible sur une deuxième partie par rapport à la première partie, le détecteur de champ magnétique (41, 42) ayant un contour en forme de barre et pouvant être déplacé le long de sa direction longitudinale dans un champ magnétique du générateur de champ magnétique (45; 48, 49), **caractérisé en ce que** le générateur de champ magnétique (45; 48, 49) forme un champ magnétique (6) homogène à l'intérieur d'une région représentant un multiple du diamètre de barre du détecteur de champ magnétique (41, 42),
**en ce qu'**une roue du véhicule (24) est suspendue par l'intermédiaire d'un essieu (27) sur un guide d'essieu supérieur et un guide d'essieu inférieur (23, 22), les guides d'essieu inférieur et supérieur (22, 23) étant respectivement reliés par articulation à un châssis de véhicule par l'intermédiaire d'un point d'articulation supérieur et inférieur (25, 26), un ressort (28) reposant au niveau du guide d'essieu inférieur (22) contre le châssis du véhicule (21);
**en ce que** le générateur de champ magnétique (45; 48, 49) est fixé au niveau du guide d'essieu inférieur;
**en ce que** le détecteur de champ magnétique (41, 42) est fixé fermement sur le châssis du véhicule;
**en ce que** le détecteur de champ magnétique (41, 42) est agencé dans une région centrale (64) de la région homogène du champ magnétique (6).

2. Capteur selon la revendication 1, **caractérisé en ce que** le générateur de champ magnétique est un aimant permanent, le détecteur de champ magnétique étant une bobine (41).

3. Capteur selon la revendication 2, **caractérisé en ce que** l'aimant permanent est constitué par un aimant annulaire (45) dont l'axe central est pour l'essentiel parallèle à l'axe longitudinal de la bobine en forme de barre (41).

4. Capteur selon la revendication 3, **caractérisé en ce que** le champ magnétique (6) produit par l'aimant annulaire (45) présente une région essentiellement à même intensité de champ, avec un contour en forme de plat et une base essentiellement plate.

5. Capteur selon la revendication 2, **caractérisé en ce que** l'aimant permanent est composé de deux barreaux magnétiques agencés en forme de fourche (49), dont la direction longitudinale est respectivement orientée perpendiculairement à la bobine en forme de barre (41) agencée entre eux.

6. Capteur selon la revendication 5, **caractérisé en ce que** le champ magnétique (6) produit par les deux barreaux magnétiques (49) à agencement en fourche présente une région essentiellement à même intensité de champ, avec un contour légèrement bombé et une région centrale essentiellement plane.

7. Capteur selon l'une des revendications précédentes, **caractérisé en ce que** la première partie comportant l'aimant permanent qui y est fixé constitue une partie mobile de la suspension d'un châssis d'un véhicule automobile (2), la deuxième partie comportant la bobine qui y est fixée constituant une partie fixe du véhicule automobile (2).

8. Capteur selon la revendication 7, **caractérisé en ce que** le signal de capteur de la bobine (41) fournit une valeur correspondant à une hauteur spécifique actuelle du véhicule.
